# EUROPÄISCHE PATENTSCHRIFT

(11) **EP 3 137 398 B1**
(45) Veröffentlichungstag und Bekanntmachung des Hinweises auf die Patenterteilung: **12.06.2019**
(21) Anmeldenummer: 15725498.8
(22) Anmeldetag: 23.04.2015
(51) Int. Cl.: B65G 45/16

(54) **GURTABSTREIFER MIT MODULSCHRÄGSTELLUNG**
BELT STRIPPER HAVING MODULE INCLINATION
RACLEUR DE COURROIE À POSITION OBLIQUE DU MODULE

(30) Priorität: 02.05.2014 DE 102014006281
(43) Veröffentlichungstag der Anmeldung: 08.03.2017
(73) Patentinhaber: Kill-Frech, Cornelia, 44652 Herne (DE)
(72) Erfinder: SCHWARZE, Hans-Otto, deceased (DE)
(74) Vertreter: Kalkoff & Partner
(86) Internationale Anmeldenummer: PCT/EP2015/000837
(87) Internationale Veröffentlichungsnummer: WO 2015/165577

(56) Entgegenhaltungen:
- EP-B1- 0 254 977
- WO-A1-94/08877
- DE-U1- 9 308 826
- US-A- 3 342 312
- US-A- 3 504 786
- US-A- 3 952 863

## Beschreibung

Die Erfindung betrifft ein Gurtabstreifersystem aus Modulen für den Rücklaufbereich von Förderbändern, wobei das Gurtabstreifersystem aus einem einstellbaren, feststehenden oder einem federnd gelagerten Träger quer zur Laufrichtung des Gurtbandes und mehreren Abstreifmodulen, die nebeneinander auf dem Träger angebracht sind, besteht. Die Abstreifmodule tragen jeweils eine Abstreiflamelle, die schälend auf dem Gurt anliegt und werden federnd an das Gurtband gedrückt. Entsprechende Gurtabstreifersysteme sind seit langem bewährter Stand der Technik, beispielhaft sei hier die EP 254 977 B1 genannt.

Die bekannten Gurtabstreifersysteme werden für die verschiedensten Fördergüter und unter den unterschiedlichsten Förderbedingungen eingesetzt. Sie müssen auch bei sich schnell ändernden Schüttguteigenschaften, etwa im Außenbereich bei einsetzendem Regen, und fernab von Reparaturwerkstätten, etwa bei der Rohstoffgewinnung, stets zuverlässig arbeiten, wobei lange Standzeiten gefordert werden. Da in der Regel hohe Folgekosten aus Produktionsaufällen resultieren, sollten die Ausfallzeiten so kurz wie möglich gehalten werden.

Diesen Forderungen wird durch eine Modulbauweise entsprochen. Übliche Module, wie sie beispielhaft in der EP 254 977 B1 und der DE OS 36 20 960 beschrieben werden, weisen auf:
- einen Fuß, der an einem der Träger befestigt ist,
- und einen Abstreifkörper, bestehend aus
   - einem Schneidenträger, an dem eine Abstreiflamelle angebracht ist,
   - einer Buchse, in der der Schneidenträger drehbar gelagert ist, und
   - einer Abstreifkante, die an der Abstreiflamelle angebracht ist,
- ein Gelenk mit einer Torsionsfeder, welches Fuß und Abstreifkörper über eine Gummidrehfeder verbindet.

Üblicherweise werden mehrere Gurtabstreifermodule auf einem Systemträger nebeneinander angeordnet. Hohe Standzeiten erreicht man auch, indem die Abstreiflamellen verschleißfeste Hartmetallabstreifkanten aufweisen.

Ein solches Gurtabstreifermodul für eine Abstreifvorrichtung für den Rücklaufbereich von Förderbändern, welches als eines von mehreren auf einem höhenverstellbaren Systemträger montiert ist, wird auch in der DE 10 2013 006 821 A1 beschrieben. Es weist die folgenden Merkmale auf:
- einen Fuß, der an dem Systemträger befestigt ist,
- einen Schneidenträger, an dem eine Abstreiflammelle mit einer Abstreifkante angebracht ist, wobei die Abstreiflamelle gegenüber dem Gurtband in Laufrichtung einen stumpfen Winkel β bildet,
- einen Abstreifkörper mit einem zwei Gelenke aufweisenden Gelenkgehäuse, bei dem
- ein erstes Gelenk, dessen Drehachse quer zur Laufrichtung des Gurtbandes verläuft, mit einer Torsionsfeder, welches Fuß und Abstreifkörper verbindet, die Torsionsfeder dabei die Abstreiflamelle an den Gurt drückt, und das erste Gelenk mit einer Federwinkelmessung und mit einem Festanschlag für die Auslenkung ausgestattet ist,
- ein zweites Gelenk mit einer Buchse, in der der Schneidenträger drehbar gelagert ist und dessen Drehachse längs zur Laufrichtung des Gurtbandes verläuft, welches den Schneidenträger am laufenden Gurt so ausrichtet, dass die Abstreifkante immer flächig am Gurt anliegt, und
- eine Höhenverstellung des Gurtabstreifermoduls am Fuß.

Hierbei werden die Gurtabstreifermodule so auf einem Systemträger nebeneinander angeordnet, dass die Abstreiflamellen in der Draufsicht genau in einem rechten Winkel gegenüber der Laufrichtung des Gurtbandes ausgerichtet sind. Von der Seite aus gesehen bildet die Abstreiflamelle dagegen einen stumpfen Winkel gegenüber dem Gurtband, wobei sich dieser entsprechend dem Verschleiß während der Laufzeit leicht ändert.

Ein seit langem bekanntes Problem bei Gurtförderern besteht darin, dass viele Schüttgüter, wie z.B. Ölsande, zum Verkleben neigen und so, die Gurtabstreifermodule zu verstopfen. Die Gurtabstreifermodule müssen daher so gestaltet werden, dass eine möglichst große Durchtrittsfläche zwischen den einzelnen Modulen verbleibt und die Gurtabstreifermodule nur wenig Anbackmöglichkeiten für das Schüttgut bieten.

Eine weitere Schwierigkeit ergibt sich bei Gurtabstreifern, bei denen versetzt angeordnete Gurtabstreifer in zwei oder mehreren hinteraneinander angeordneten Reihen an einen elastischen Gurt gedrückt werden. Hierdurch wird dem Gurt eine Welligkeit aufgeprägt, die die Abstreifwirkung beeinträchtigt. Hinzu kommt, dass sich bei einer Vielzahl von Gurtabstreifermodulen über einem Systemträger die einzelnen Gurtabstreifermodule in ihrer Abstreifwirkung überlappen. Hierdurch entstehen weitere Ungleichmäßigkeiten beim Verschleiß.

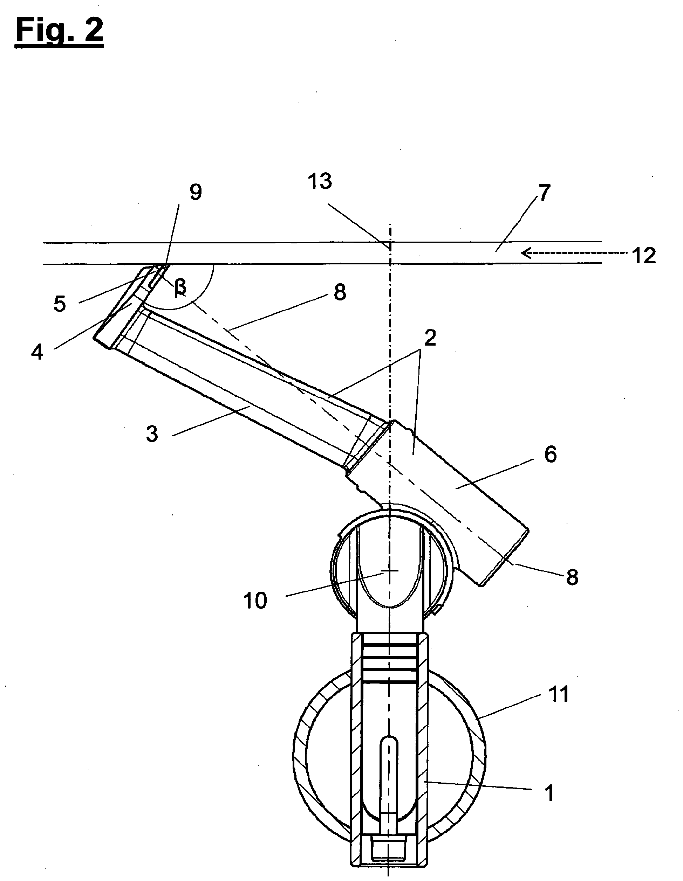

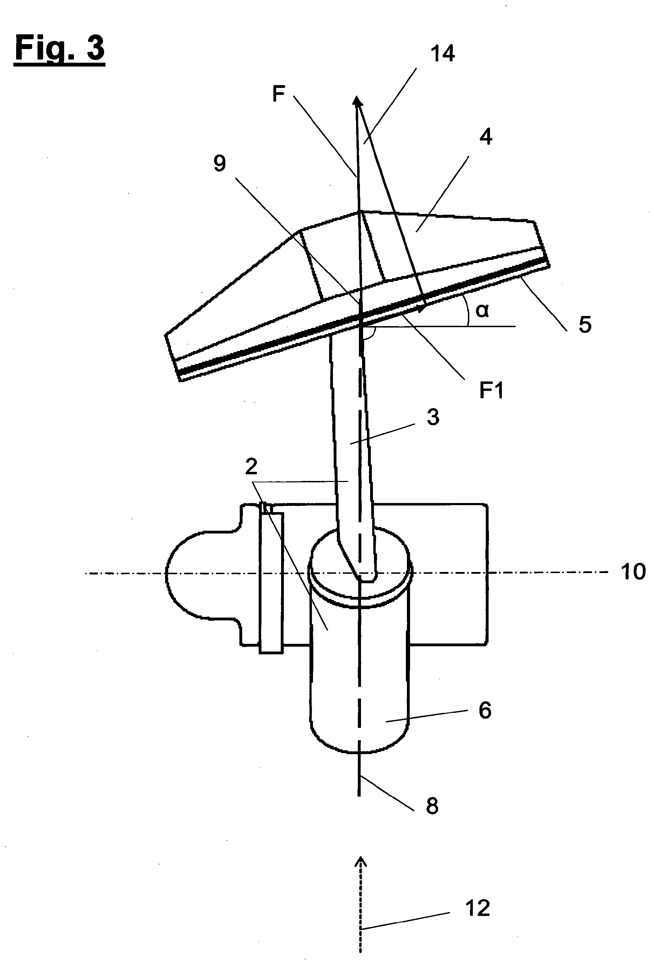

Möglichst große Durchtrittsflächen ergeben sich bei ziehenden Gurtabstreifermodulen dann, wenn sie leicht schräg gestellt werden. Solche Gurtabstreifermodule sind bereits bekannt. So beschreibt die US 3,504,786 eine solche Anordnung, wobei in deren Fig. 2 eine Vorrichtung gezeigt ist, bei der lediglich die Abstreiflamellen schräg gestellt sind, und wobei in deren Fig. 3 eine Vorrichtung gezeigt wird, in der sowohl die Abstreiflamellen als auch die Schneidenträger schräg zur Laufrichtung des Gurtbandes ausgerichtet sind. Hierbei wird auch gezeigt (Bezugszeichen 40), dass das Gut seitlich schräg abgeworfen wird, was zu einer Verringerung der Anbackungsneigung führt. Die schräggestellten Schneidenträger sind jedoch nicht drehbar gelagert und können sich nicht selbsttätig am Gurt ausrichten.

Auch aus wissenschaftlichen Untersuchungen sind die Vorteile von schräg gestellten Abstreifern bekannt. Dies beschreibt "Zhang, Dynamisches Verhalten von Stahllamellen-Abstreifern an Gurtförderern, Universität Hannover, Dissertation 1982". Dort wurde u.a. festgestellt, dass die Reinigungsleistung sich bei schräggestellten Lamellen merklich erhöht.

Obwohl die Vorteile von schräggestellten Gurtabstreifern - wie vorstehend geschildert - durchaus bekannt sind, haben sich schräg gestellte Abstreifer in der Praxis nicht durchsetzen können. WO 94/08877 beschreibt eine Verwendung und eine Vorrichtung nach den Oberbegriffen der Ansprüche 1 und 5.

Die Aufgabe der Erfindung ist daher, eine einfache und wirtschaftliche Vorrichtung bereitzustellen, die die oben beschriebenen Probleme löst. Ein Rücklauf des Gurtes, wie er aus verschiedenen Gründen häufig vorkommt, muss außerdem möglich sein, ohne den Abstreifer oder den Gurt zu beschädigen.

Die Erfindung löst die Aufgabe mittels der Verwendung gemäß Anspruch 1 und mittels der Vorrichtung gemäß Anspruch 5.

Gegenüber der oben erwähnten DE 10 2013 006 821 A1 werden die Gurtabstreifermodule also um eine Achse verdreht, die lotrecht durch den Gurt führt, und zwar um den Winkel α. Dieser ist zu unterscheiden von dem stumpfen Winkel β, den die Abstreiflamelle in Andrückrichtung gegenüber dem Gurt in Laufrichtung bildet, wobei die Drehachse durch den Gurt selbst verläuft. Während die Drehachse des stumpfen Winkels β bei der DE 10 2013 006 821 A1 einen rechten Winkel zur Gurtlaufrichtung bildet, ist sie im vorliegenden Fall um denselben Winkel α gedreht, verläuft aber immer noch in der Gurtebene.

Weiterhin ist auch die Längs-Drehachse von Bedeutung, um die der Abstreifkörper drehbar ist. Diese Längs-Drehachse ist weder lotrecht zum Gurt ausgerichtet, noch liegt sie in der Gurtebene, sondern sie bildet einen spitzen Raumwinkel zum Gurt.

Die genaue Winkellage der Längs-Drehachse ist für die Funktion der Erfindung nicht von Bedeutung, wichtig ist lediglich, dass die Abstreiflamelle im Schnittpunkt der Längs-Drehachse durch den Gurt auf dem Gurt anliegt.

In Ausgestaltungen der Erfindung wird vorgesehen, dass der Winkel α zwischen 5 und 45 Grad, bevorzugt zwischen 10 und 30 Grad und besonders bevorzugt zu 15 Grad gewählt wird.

Wichtig ist, dass die in der Mitte der Abstreifkante liegende Abstreifkörper-Drehachse die Gurtfläche in dem Punkt schneidet, in dem die Abstreiflamelle die Gurtfläche berührt und dass der Abstreifkörper sich selbsttätig ausrichten kann. Nur bei dieser Lage der Abstreifkörper-Drehachse wird ein gerader Verschleiß der Lamellenabstreifkante erreicht.

Dies liegt daran, dass durch die Schrägstellung der Abstreiferlamelle typischerweise Drehmomente um die Abstreifkörper-Drehachse erzeugt werden, die durch unsymmetrisch angreifende Reibungskräfte, durch resultierende Kräfte aus dem abgestreiften Gut und durch Rückstellkräfte des Abstreifermoduls entstehen und diese Drehmomente über die Länge der Abstreifkante unterschiedliche Andruckkräfte der Abstreifkante an den Gurt bewirken. Sobald die Abstreifkörper-Drehachse aber so ausgerichtet wird, dass sie die Abstreifkante der Abstreiflamelle genau an dem Punkt schneidet, an dem die Abstreifkante an dem Gurt anliegt, treten keine Drehmomente mehr auf.

Dieser Schnittpunkt muss jedoch während des Betriebes nicht ständig exakt eingestellt werden, kleine Abweichungen vom Schnittpunkt sind unschädlich und zulässig, da diese nur kleine Drehmomente um die Abstreifkörperdrehachse zur Folge haben.

In einer weiteren Ausgestaltung der Erfindung ist daher vorgesehen, dass der Ort des Schnittpunktes der Abstreifkörper-Drehachse in der Abstreifkante der Abstreiflamelle in Höhe der halben Verschleißhöhe der Abstreifkante gewählt wird. Es erfolgt in diesem Fall im Neuzustand der Module zunächst ein leicht ungleichförmiger Verschleiß, der die Abstreifkante an der einen Seite stärker verschleißt als an der anderen Seite. Sobald die halbe Verschleißhöhe abgeschliffen ist, befindet sich die Abstreifkörper-Drehachse genau an dem Punkt, an dem die Abstreifkante am Gurt anliegt und der Verschleiß ist genau gleichmäßig. Mit weiterer Fahrt und fortschreitendem Verschleiß kehrt sich, gleiche Betriebsverhältnisse vorausgesetzt, die Ungleichförmigkeit des Verschleißes genau um und die andere Seite verschleißt stärker. Am Ende der Modullebensdauer haben sich dann die leicht ungleichförmigen Verschleißvorgänge genau ausgeglichen und die Abstreifkante ist gleichförmig verschlissen.

Der Vorteil der Erfindung ergibt sich dadurch, dass sich jede Abstreiflamelle selbsttätig so ausrichtet, dass der Verschleiß gleichmäßig wird, obwohl die Gurtabstreifermodule schräg gestellt sind. Die Vorteile schräg gestellter Gurtabstreifer, größerer Freiraum der Abwurffläche und größere Reinigungsleistung, müssen daher nicht mehr durch ungleichmäßigen Verschleiß erkauft werden.

Wichtig ist ebenfalls, dass die Abstreifwirkung stets ziehend erfolgt. Das bedeutet, dass die Abstreifkörper-Schwenkachse, beziehungsweise ihre Projektion senkrecht auf den Gurt, in Gurtlaufrichtung gesehen vor dem Schnittpunkt der Abstreifkante mit dem Gurt liegt.

Die Schrägstellung wird durch eine oder mehrere der folgenden Maßnahmen bewirkt:
- Der Winkel α wird zwischen der Abstreifkörper-Drehachse und der Abstreifkörper-Schwenkachse eingestellt, beispielsweise durch entsprechende Fertigung des Gehäuses, welches die beiden Drehachsen aufnimmt.
- Der Winkel α wird durch gewinkeltes Befestigen der Abstreiflamelle am Schneidenträger bewirkt, das heißt, dass der Winkel zwischen der Abstreifkante und der Abstreifkörper-Drehachse eingestellt wird. Beispielsweise kann die Abstreiflamelle am Schneidenträger seitlich gebogen werden.
- Der Winkel α wird durch verdrehte Montage des Fußes des kompletten Gurtabstreifermoduls auf dem Systemträger eingestellt.

Sofern eine Kombination dieser Schrägstellungsmaßnahmen zum Einsatz kommen soll, muss der Schrägstellungswinkel α durch Addition der einzelnen Raumwinkel ermittelt werden, gemessen wird der Schrägstellungswinkel stets an der Lage der Abstreifkante gegenüber dem rechten Winkel zur Gurtlaufrichtung.

In einer weiteren Ausgestaltung der Erfindung sind mehrere, insbesondere 1 bis 20 erfindungsgemäße Gurtabstreifermodule nebeneinander auf einem Systemträger angeordnet, wobei sich die Anzahl der eingesetzten Gurtabstreifermodule nach der Breite des Gurtes richtet. Die Gurtabstreifermodule weisen alle denselben Winkel α auf. Die Abstreifkanten dieser Gurtabstreifermodule überlappen sich, um eine lückenlose, ununterbrochene Reinigung der gesamten Gurtfläche zu erzielen.

Die Erfindung wird nachfolgend näher erläutert. Die Skizzen Fig.1 bis Fig. 6 zeigen:
- Fig. 1a: eine Vorderansicht des Gurtabstreifermoduls mit schräggestelltem Gurtabstreifermodul,
- Fig. 1b: eine Draufsicht des Gurtabstreifermoduls wie in Fig. 1a
- Fig. 2: eine Seitenansicht des Gurtabstreifermoduls wie in Fig. 1a,
- Fig. 3: eine Draufsicht des Gurtabstreifermoduls mit abgewinkelter Absstreiflamelle,
- Fig. 4: eine Seitenansicht des Gurtabstreifermoduls wie in Fig. 3,
- Fig. 5: eine Vorderansicht eines Systemträgers in Gurtlaufrichtung, und
- Fig. 6: eine Draufsicht eines Systemträgers.

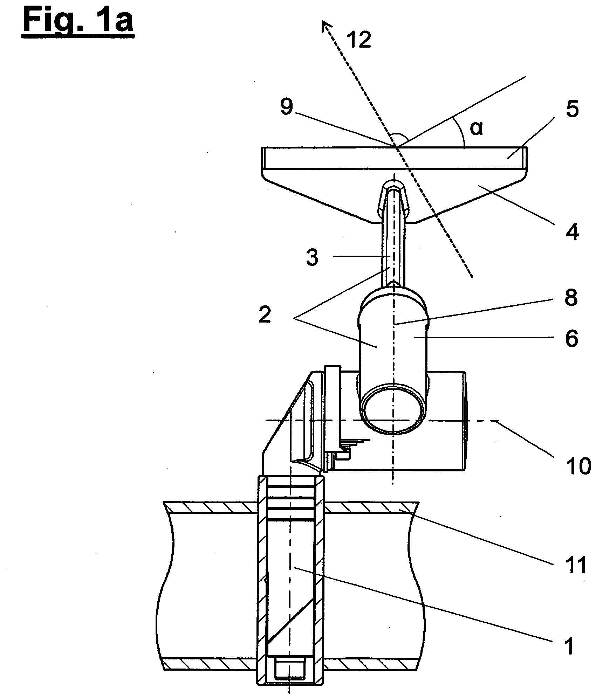

Fig. 1a zeigt in Vorderansicht das Gurtabstreifermodul mit einem Fuß 1, einem Abstreifkörper 2, der einen Schneidenträger 3 enthält, an dem eine Abstreiflamelle 4 angebracht ist, an deren Spitze die Abstreifkante 5 angebracht ist. Der Abstreifkörper 2 enthält auch die Buchse 6, in der der Schneidenträger 3 frei drehbar gelagert ist. Die Buchse 6 ist fest mit der Abstreifkörper-Schwenkachse 10 verbunden und bildet selbst die Abstreifkörper-Drehachse 8. Diese Abstreifkörper-Drehachse 8 schneidet die Abstreifkante 5 im Schnittpunkt 9.

Mit dem Systemträger 11 ist verbunden eine Abstreifkörper-Schwenkachse 10 mit einer Torsionsfeder, welche Fuß 1 und Abstreifkörper 2 schwenkbar verbindet und dabei den Abstreifkörper 2 gegen den Gurt drückt. Die Gurtlaufrichtung 12 verläuft schräg im Bild, da die Darstellung um den Schrägstellungswinkel α gedreht ist. In der in Fig. 1a gezeigten Variante bleiben Abstreifkörper-Schwenkachse 10 und die Abstreifkörper-Drehachse 8 rechtwinklig zueinander und die Schrägstellung der Abstreifkante 5 gegenüber der Gurtlaufrichtung 12 wird durch einen entsprechenden Einbau des Fußes 1 in den Systemträger 11 bewirkt.

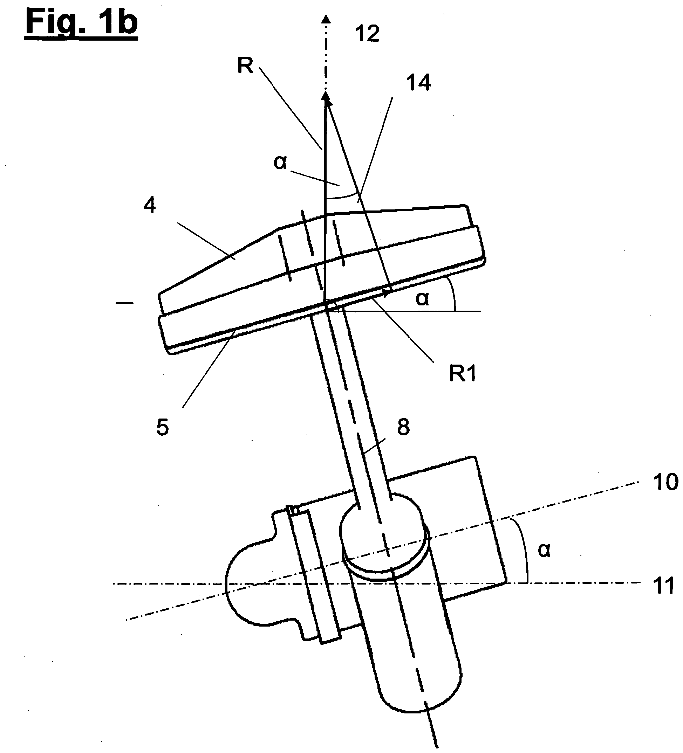

Fig. 1b zeigt in Draufsicht das Gurtabstreifermodul wie in Fig. 1a. Zur Verdeutlichung der erfindungsgemäßen Wirkung ist das aufgrund der Reibungskräfte entstehende Kräftedreieck 14 beispielhaft eingezeichnet. Als Reibungskraft R werden hier alle Reibkräfte zusammengefasst, die aus der Interaktion von Gurtabstreifermodul und Gurt sowie Abstreifgut auftreten, wobei diese Reibkräfte zeitlich variabel sein können. Die gezeigte, bei einer quer zur Gurtlaufrichtung 12 stehenden Lamelle 4 (α=0°) nicht auftretende Reibkraftkomponente R1 hat nur bei der erfindungsgemäßen Lage der Abstreifkörperdrehachse 8 keinen Einfluss auf die Druckkräfte der Lamelle 4, da diese Kraft mittig auf die Drehachse wirkt und damit keinen Hebelarm besitzt und somit auch kein Drehmoment erzeugt. Jede andere Lage der Abstreifkörper-Drehachse 8, die den Gurt in einem Abstand ober- oder unterhalb des Berührungspunkte von Gurt und Abstreiferkante schneidet, erzeugt zwangsläufig ein entsprechendes Drehmoment. Das entsprechende Kräftepaar aus diesem Drehmoment sorgt zwangsläufig immer für eine ungleichmäßige Druckverteilung über die Lamellenlänge. Entsprechend ungleichmäßig verschleißt dann auch die Lamelle.

Fig. 2 zeigt in Seitenansicht das Gurtabstreifermodul wie in Fig. 1. Die Abstreifkörper-Drehachse 8 schneidet die Abstreifkante 5 im Schnittpunkt 9 in Höhe der halben Verschleißhöhe der Abstreifkante 5. Dieser Schnittpunkt 9 wandert im Verlauf des Verschleißes der Abstreifkante 5 zum Gurt 7 hin und durch ihn hindurch. Die Projektion der Abstreifkörper-Schwenkachse 10 berührt den Gurt in der Projektionslinie 13, diese liegt in Gurtlaufrichtung 12 vor dem Schnittpunkt 9. Die Fig. 2 zeigt auch den stumpfen Winkel β zwischen dem Gurt 7 und der Abstreiflamelle 4, die Drehachse des stumpfen Winkels β entspricht der Lage der Längsachse der Abstreifkante 5.

Fig. 3 zeigt eine Draufsicht eines Gurtabstreifermoduls mit dem Schrägstellungswinkel α, bei dem die Abstreifkante 5 schräg am Schneidenträger 3 befestigt ist. Die Drehbarkeit der Abstreifkörper-Drehachse 8 lässt die Drehung der Abstreifkante 5 am Gurt entsprechend zu, weswegen sich die Abstreifkante 5 frei ausrichten kann. Die Schrägstellungswinkel α beträgt im dargestellten Beispiel 15 Grad und wird zwischen der Orthogonalen zur Gurtlaufrichtung 12 und der Abstreifkante 5 gemessen.

Auch bei dieser Ausführungsform muss die Abstreifkörper-Drehachse 8 den Gurt genau im Berührpunkt der Abstreifkante 5 mit dem Gurt 7 schneiden, damit sich ein gleichmäßiger Verschleiß an der Abstreifkante ergibt. Dabei kommt es bei einer Änderung des Abstandes zwischen der Abstreifkörper-Drehachse 10 und dem Gurt 7, z.B. beim Vorspannen des Abstreifers oder durch Höhenänderung der Abstreifkante 5 durch Verschleiß, aufgrund der Geometrie zu einer Drehbewegung der Abstreiflamelle um die Abstreifkörper-Drehachse 8. Nur wenn die Abstreifkörper-Drehachse 8 den Gurt genau im Berührpunkt der Abstreifkante 5 mit dem Gurt 7 schneidet, wird verhindert, dass die Abstreifkante 5 durch diesen Effekt so verschwenkt wird, dass keine gleichmäßige Anpressung der Abstreifkante an den Gurt erreicht wird.

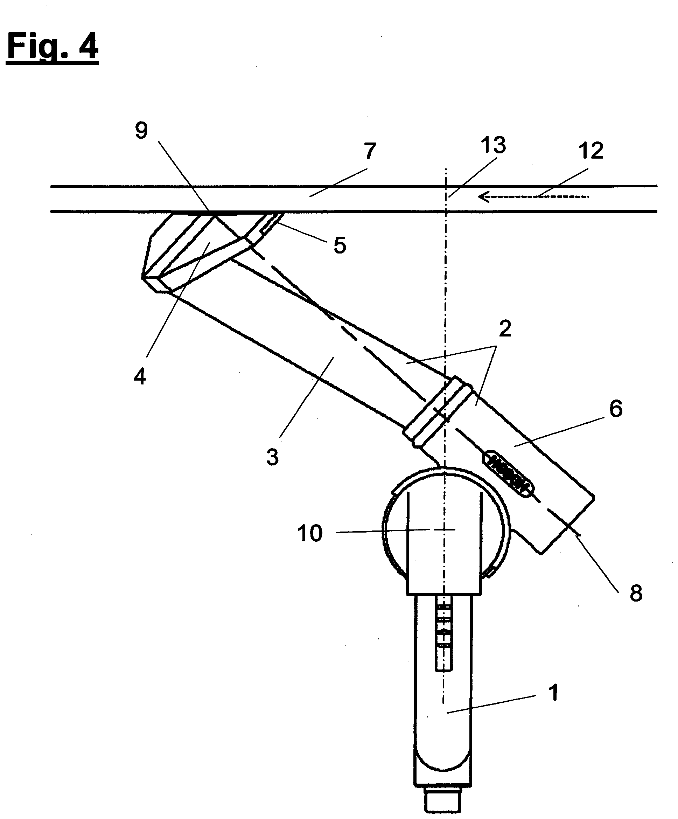

Fig. 4 zeigt in Seitenansicht das Gurtabstreifermodul wie in Fig. 3.

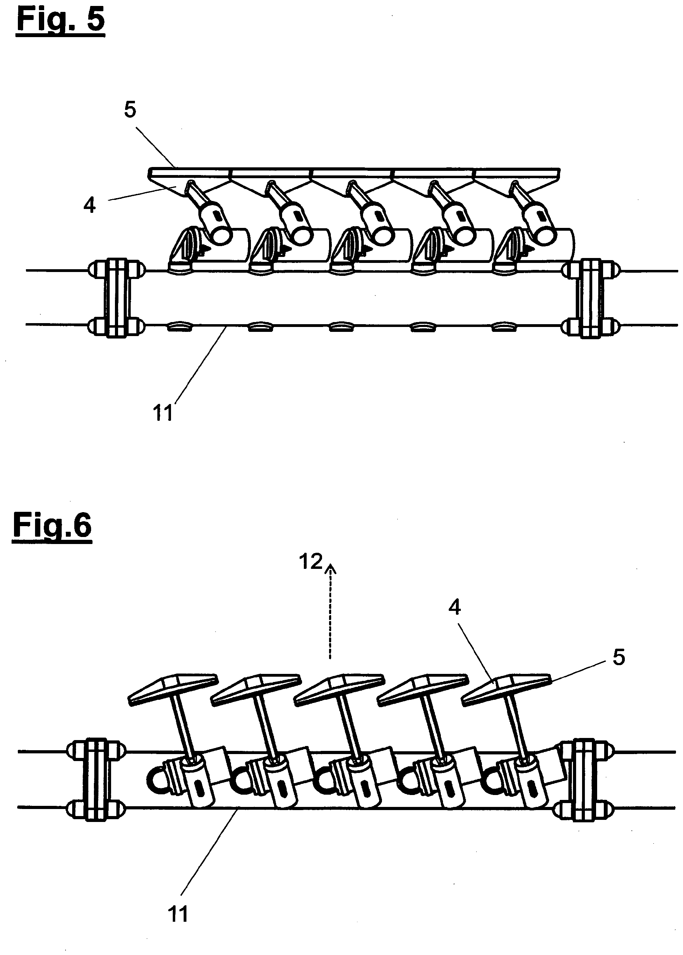

Fig. 5 zeigt einen Systemträger 11 mit zahlreichen, schräggestellten Gurtabstreifermodulen in der Gurtlaufrichtung 12 aus der Blickrichtung der Gurtunterseite, im dargestellten Beispiel sind es 5. Die Gurtabstreifermodule sind hierbei so angeordnet, dass sie die gesamte Gurtbreite lückenlos abdecken. Auch eine Überlappung der Spuren ist durch die Schrägstellung problemlos möglich, ohne dass sich die einzelnen Gurtabstreifermodule beim Zurückschwenken, etwa beim Auftreffen auf Hindernisse, gegenseitig behindern würden.

Fig. 6 zeigt eine entsprechende Draufsicht mit dem Schrägstellungswinkel α, der 15 Grad beträgt. Die Schrägstellung wird wie in Fig. 1 und Fig. 2 durch entsprechenden Einbau der Gurtabstreifermodule auf dem Systemträger bewirkt.

In einem Modellversuch wurde die Schrägstellung getestet, wobei die Abstreifkante durch schnell verschleißendes Material, hier wurde Holz gewählt, ersetzt wurde, um das Verschleißverhalten unterschiedlicher Anordnungen zu prüfen. Hierbei ergab sich, dass ein ungleichmäßiger Verschleiß sofort einsetzt, wenn der Abstand des Schnittpunktes 9 vom Gurt 7 wenige Millimeter übersteigt und weiterhin, dass die Art der Schrägstellung kaum Einfluss auf das Verschleißverhalten der Abstreifkante hat. Die Schrägstellung kann also je nach den Abstreifeigenschaften des abzustreifenden Schüttgutes optimiert werden, wobei der Fachmann den Schrägstellungswinkel α sowie die beste Überlappung der Gurtabstreiferspuren in jedem einzelnen Fall aufgrund von einfachen Vorversuchen und Erfahrung einstellen kann.

Im weiteren wurden Modellrechnungen als dynamische Simulation durchgeführt, in denen die von Gurt und abgestreiftem Schüttgut einwirkenden Kräfte durch eine konstante Reibungskraft in Gurtlaufrichtung simuliert wurden. Bei den Versuchen 1 bis 3 wurde ein Gurtabstreifermodul entsprechend Fig. 3, bei den Versuchen 4 und 5 ein Gurtabstreifermodul gemäß Fig. 1a/1b verwendet.

| Versuch | 1 | 2 | 3 | 4 | 5 |
|---|---|---|---|---|---|
| Winkel α (Grad) bei Neuzustand | 15 | 15 | 14,2 | 15 | 15 |
| Winkel α (Grad) nach Verschleiß | 17,7 | 15,33 | 27,5 | 15 | 15 |
| Winkel β (Grad) bei Neuzustand | 120 | 120 | 120 | 120 | 120 |
| Winkel β (Grad) nach Verschleiß | 132 | 132 | 132 | 132 | 132 |
| Drehachse 8 scheidet Abstreifkante | ja | nein | nein | ja | nein |
| Winkel (Grad) zwischen Drehachse 8 und Gurt bei Neuzustand | 30 | 0 | 65 | 30 | 50 |
| Winkel (Grad) zwischen Drehachse 8 und Gurt nach Verschleiß | 42 | 12 | 77 | 42 | 62 |
| Kraft Rechts (N) bei Neuzustand | 71,1 | 59,7 | 66,4 | 60,2 | 66,1 |
| Kraft Links (N) bei Neuzustand | 70,8 | 59,3 | 65,6 | 61,5 | 51,0 |
| Kraft Rechts (N) nach Verschleiß | 48,2 | 34,2 | 58,2 | 52,2 | 70,0 |
| Kraft Links (N) nach Verschleiß | 49,4 | 41,6 | 25,8 | 53,4 | 51,0 |

Wie man bei den Versuchen 2, 3 und 5 sieht, ergeben sich auch bei sonst unterschiedlichen Anordnungen immer dann während des Betriebs deutlich unterschiedliche Andrückkräfte an den Seiten der Abstreifkante, wenn die Drehachse 8 die Abstreifkante nicht schneidet, und somit ergibt sich unterschiedlicher Verschleiß.

### Bezuaszeichenliste

- 1: Fuß
- 2: Abstreifkörper
- 3: Schneidenträger
- 4: Abstreiflamelle
- 5: Abstreifkante
- 6: Buchse
- 7: Gurt
- 8: Abstreifkörper-Drehachse
- 9: Schnittpunkt
- 10: Abstreifkörper-Schwenkachse
- 11: Systemträger
- 12: Gurtlaufrichtung
- 13: Projektionslinie
- 14: Kräftedreieck
- α: Schrägstellungswinkel
- R: Reibkraft
- R1: Reibkraft

## Patentansprüche

1. Verwendung eines Gurtabstreifermoduls als eine Abstreifvorrichtung für den Rücklaufbereich von Förderbändern, wobei das Gurtabstreifermodul aufweist:
• einen Fuß (1), der in einem Systemträger (11) befestigt ist,
• einen Abstreifkörper (2), bestehend aus
▪ einem Schneidenträger (3), an dem eine Abstreiflamelle (4) angebracht ist,
▪ einer Buchse (6), in der der Schneidenträger (3) drehbar um eine Abstreifkörper-Drehachse (8) gelagert ist, und
▪ einer Abstreifkante (5), die an der Abstreiflamelle (4) angebracht ist,
▪ wobei die Abstreiflamelle (4) gegenüber dem Gurt (7) in Gurtlaufrichtung (12) einen stumpfen Winkel β bildet, und
• eine Abstreifkörper-Schwenkachse (10) mit einer Torsionsfeder, welche Fuß (1) und Abstreifkörper (2) verbindet und dabei den Abstreifkörper (2) gegen den Gurt (7) drückt,
• die Abstreifkörper-Schwenkachse (10), in Gurtlaufrichtung (12) gesehen, vor dem Schnittpunkt (9) der Abstreifkante (5) der Abstreiflamelle (4) liegt, wobei die Abstreifkörper-Drehachse (8) so ausgerichtet wird, dass sie die Abstreifkante (5) der Abstreiflamelle (4) schneidet,
**dadurch gekennzeichnet, dass**
• die Abstreifkante (5) am Gurt (7) in einem spitzen Winkel α, rechtwinklig zur Gurtlaufrichtung (12) gemessen und in Blickrichtung zur Gurtoberfläche gesehen, anliegt.

2. Verwendung nach Anspruch 1, **dadurch gekennzeichnet, dass** der Winkel α zwischen 5 Grad und 45 Grad beträgt.

3. Verwendung nach Anspruch 1, **dadurch gekennzeichnet, dass** der Winkel α zwischen 10 Grad und 30 Grad beträgt.

4. Verwendung nach Anspruch 1, **dadurch gekennzeichnet, dass** der Winkel α gleich 15 Grad beträgt.

5. Vorrichtung aus Gurtabstreifermodul mit Gurt (7) und Systemträger (11) für eine Abstreifvorrichtung für den Rücklaufbereich von Förderbändern, wobei das Gurtabstreifermodul aufweist:
• einen Fuß (1), der in einem Systemträger (11) befestigt ist,
• einen Abstreifkörper (2), bestehend aus
▪ einem Schneidenträger (3), an dem eine Abstreiflamelle (4) angebracht ist,
▪ einer Buchse (6), in der der Schneidenträger (3) drehbar um eine Abstreifkörper-Drehachse (8) gelagert ist, und
▪ einer Abstreifkante (5), die an der Abstreiflamelle (4) angebracht ist,
▪ wobei die Abstreiflamelle (4) gegenüber dem Gurt (7) in Gurtlaufrichtung (12) einen stumpfen Winkel β bildet, und
• eine Abstreifkörper-Schwenkachse (10) mit einer Torsionsfeder, welche Fuß (1) und Abstreifkörper (2) verbindet und dabei den Abstreifkörper (2) gegen den Gurt (7) drückt,
• die Abstreifkörper-Schwenkachse (10), in Gurtlaufrichtung (12) gesehen, vor dem Schnittpunkt (9) der Abstreifkante (5) der Abstreiflamelle (4) liegt, wobei die Abstreifkörper-Drehachse (8) so ausgerichtet wird, dass sie die Abstreifkante (5) der Abstreiflamelle (4) schneidet,
**dadurch gekennzeichnet, dass**
• die Abstreifkante (5) am Gurt (7) in einem spitzen Winkel α, rechtwinklig zur Gurtlaufrichtung (12) gemessen und in Blickrichtung zur Gurtoberfläche gesehen, anliegt.

6. Vorrichtung nach Anspruch 5, **dadurch gekennzeichnet, dass** der Ort des Schnittpunkts der Abstreifkörper-Drehachse (8) in der Abstreifkante (5) der Abstreiflamelle (4) in Höhe der halben Verschleißhöhe der Abstreiflamelle (4) gewählt wird.

7. Vorrichtung nach einem der Ansprüche 5 oder 6 mit zwei bis zwanzig Gurtabstreifermodulen auf dem Systemträger (11), **dadurch gekennzeichnet, dass** die Gurtabstreifermodule alle im gleichen Winkel α schräg gestellt sind und ihre Abstreiflamellen (4) die gesamte Gurtbreite abdecken.

8. Vorrichtung nach Anspruch 7, **dadurch gekennzeichnet, dass** die Gurtabstreifermodule so angeordnet werden, dass sich die Spuren auf dem Gurt überlappen.

## Claims

1. Use of a belt stripper module as a stripping device for the return region of conveyor belts, wherein the belt stripper module comprises:
• a base (1) that is fastened in a system carrier (11),
• a stripping body (2) consisting of:
- a cutter carrier (3) on which a stripping blade (4) is attached,
- a sleeve (6) in which the cutter carrier (3) is rotatably mounted about a stripping body rotary axis (8), and
- a stripping edge (5) that is attached to the stripping blade (4),
- wherein the stripping blade (4) forms an obtuse angle β relative to the belt (7) in the belt running direction (12), and
• a stripping body pivot axis (10) with a torsion spring that connects the base (1) and the stripping body (2) and thereby presses the stripping body (2) against the belt (7),
• the stripping body pivot axis (10), viewed in the belt running direction (12), lies before the point of intersection (9) of the stripping edge (5) of the stripping blade (4), wherein the stripping body rotary axis (8) is aligned to intersect the stripping edge (5) of the stripping blade (4),
**characterized in that**
• the stripping edge (5) lies against the the belt (7) at an acute angle α, measured at a right angle to the belt running direction (12) and viewed in the viewing direction toward the belt surface.

2. The use according to claim 1, **characterized in that** the angle α is between 5 degrees and 45 degrees.

3. The use according to claim 1, **characterized in that** the angle α is between 10 degrees and 30 degrees.

4. The use according to claim 1, **characterized in that** the angle α is equal to 15 degrees.

5. A device consisting of a belt stripper module with a belt (7) and system carrier (11) for a stripping device for the return region of conveyor belts, wherein the belt stripper module comprises:
• a base (1) that is fastened in a system carrier (11),
• a stripping body (2) consisting of:
- a cutter carrier (3) on which a stripping blade (4) is attached,
- a sleeve (6) in which the cutter carrier (3) is rotatably mounted about a stripping body rotary axis (8), and
- a stripping edge (5) that is attached to the stripping blade (4),
- wherein the stripping blade (4) forms an obtuse angle β relative to the belt (7) in the belt running direction (12), and
• a stripping body pivot axis (10) with a torsion spring that connects the base (1) and the stripping body (2) and thereby presses the stripping body (2) against the belt (7),
• the stripping body pivot axis (10), viewed in the belt running direction (12), lies before the point of intersection (9) of the stripping edge (5) of the stripping blade (4), wherein the stripping body rotary axis (8) is configured to intersect the stripping edge (5) of the stripping blade (4),
**characterized in that**
• the stripping edge (5) lies against the belt (7) at an acute angle α, measured at a right angle to the belt running direction (12) and viewed in the viewing direction toward the belt surface.

6. The device according to claim 5, **characterized in that** the location of the point of intersection of the stripping body rotary axis (8) in the stripping edge (5) of the stripping blade (4) is selected to be at the height of one-half of the wear height of the stripping blade (4).

7. The device according to one of claims 5 or 6 with two to twenty belt stripper modules on the system carrier (11), **characterized in that** the belt stripper modules are all angled at the same angle α, and their stripping blades (4) cover the entire belt width.

8. The device according to claim 7, **characterized in that** the belt stripper modules are arranged such that the tracks on the belt overlap.

## Revendications

1. Utilisation d'un module de raclage de courroie en tant que dispositif de raclage pour le brin de retour de bandes transporteuses, le module de raclage de courroie présentant :
• un pied (1) fixé dans un support de système (11),
• un corps de raclage (2) comprenant :
∘ un porte-lame (3) auquel est fixé une lamelle de raclage (4),
∘ une douille (6) dans laquelle le porte-lame (3) est monté de façon rotative autour d'un axe de rotation de corps de raclage (8), et
∘ une arête de raclage (5) fixée à la lamelle de raclage (4),
∘ la lamelle de raclage (4) formant un angle obtus β par rapport à la courroie (7) dans la direction de déplacement de courroie (12), et
• un axe de pivotement de corps de raclage (10) avec un ressort de torsion reliant le pied (1) et le corps de raclage (2) et pressant simultanément le corps de raclage (2) contre la courroie (7),
• l'axe de pivotement de corps de raclage (10), vu dans la direction de déplacement de courroie (12), se trouvant en amont du point d'intersection (9) de l'arête de raclage (5) de la lamelle de raclage (4), l'axe de rotation de corps de raclage (8) étant orienté de manière à couper l'arête de raclage (5) de la lamelle de raclage (4),
**caractérisée en ce que**
• l'arête de raclage (5) s'applique sur la courroie (7) en formant un angle aigu α, mesuré perpendiculairement à la direction de déplacement de courroie (12) et vu dans la direction vers la surface supérieure de la courroie.

2. Utilisation selon la revendication 1, **caractérisée en ce que** l'angle α mesure entre 5 degrés et 45 degrés.

3. Utilisation selon la revendication 1, **caractérisée en ce que** l'angle α mesure entre 10 degrés et 30 degrés.

4. Utilisation selon la revendication 1, **caractérisé en ce que** l'angle α mesure 15 degrés.

5. Dispositif constitué d'un module de raclage de courroie avec courroie (7) et d'un support de système (11) pour un dispositif de raclage pour le brin de retour de bandes transporteuses, dans lequel le module de raclage de courroie présente :
• un pied (1) fixé dans un support de système (11),
• un corps de raclage (2) comprenant :
∘ un porte-lame (3) auquel est fixé une lamelle de raclage (4),
∘ une douille (6) dans laquelle le porte-lame (3) est monté de façon rotative autour d'un axe de rotation de corps de raclage (8), et
∘ une arête de raclage (5) fixée à la lamelle de raclage (4),
∘ la lamelle de raclage (4) formant un angle obtus β par rapport à la courroie (7) dans la direction de déplacement de courroie (12), et
• un axe de pivotement de corps de raclage (10) avec un ressort de torsion reliant le pied (1) et le corps de raclage (2) et pressant simultanément le corps de raclage (2) contre la courroie (7),
• l'axe de pivotement de corps de raclage (10), vu dans la direction de déplacement de courroie (12), se trouvant en amont du point d'intersection (9) de l'arête de raclage (5) de la lamelle de raclage (4), l'axe de rotation de corps de raclage (8) étant orienté de manière à couper l'arête de raclage (5) de la lamelle de raclage (4),
**caractérisé en ce que**
• l'arête de raclage (5) s'applique sur la courroie (7) en formant un angle aigu α, mesuré perpendiculairement à la direction de déplacement de courroie (12) et vu dans la direction vers la surface supérieure de la courroie.

6. Dispositif selon la revendication 5, **caractérisé en ce que** l'emplacement du point d'intersection de l'axe de rotation de corps de raclage (8) dans l'arête de raclage (5) de la lamelle de raclage (4) est choisi au niveau de la moitié de la hauteur d'usure de la lamelle de raclage (4).

7. Dispositif selon l'une des revendications 5 ou 6, comprenant deux à vingt modules de raclage de courroie sur le support de système (11),
**caractérisé en ce que** les modules de raclage de courroie sont tous disposés de façon oblique selon un même angle α et leurs lamelles de raclage (4) recouvrent l'ensemble de la largeur de courroie.

8. Dispositif selon la revendication 7, **caractérisé en ce que** les modules de raclage de courroie sont disposés de telle façon que les pistes sur la courroie (7) se chevauchent.
